# EUROPÄISCHE PATENTANMELDUNG

(11) **EP 0 545 169 A2**
(43) Veröffentlichungstag der Anmeldung: **09.06.1993**
(21) Anmeldenummer: 92119775.2
(22) Anmeldetag: 20.11.1992
(51) Int. Cl.: C01B 21/068, C01B 33/037, C01B 31/36

(54) **Fluorarme siliciumhaltige keramische Pulver und Verfahren zu deren Herstellung**

(30) Priorität: 03.12.1991 DE 4139748
(71) Anmelder: BAYER AG, 51368 Leverkusen (DE); H.C. Starck GmbH & Co. KG, D-38642 Goslar (DE)
(72) Erfinder: Nietfeld, Georg, Dr., W-3388 Bad Harzburg 1 (DE); Schwier, Gerd, Dr., W-3380 Goslar (DE); Pitzer, Ulrike, Dr., W-4150 Krefeld 1 (DE); Lange, Horst, Dr., W-4630 Bochum 1 (DE)

(57) **Zusammenfassung**

Die Erfindung betrifft fluorarme keramische Pulver, insbesondere Silicium, Siliciumnitrid und Siliciumcarbid, sowie Verfahren zu deren Herstellung durch Aussetzung des Ausgangspulvers an einer Athmosphäre, die ganz oder teilweise aus Wasserstoff, Ammoniak, Wasserdampf oder Gemischen dieser Gase mit Stickstoff oder Edelgasen besteht.

## Beschreibung

Die vorliegende Erfindung betrifft fluorarme keramische Pulver, insbesondere Silicium, Siliciumnitrid und Siliciumcarbid, sowie Verfahren zu deren Herstellung.

Sehr feinteilige keramische Pulver werden aufgrund ihrer beträchtlichen Sinteraktivität als Ausgangsstoffe zur Herstellung hochwertiger keramischer Formteile eingesetzt, die ein großes Anwendungsgebiet, z.B. im Bereich der Ingenieurkeramik, der Biokeramik und der Elektrokeramik gefunden haben.

Häufig wird eine hohe chemische Reinheit der keramischen Materialien gefordert, um die erwünschten chemischen und physikalischen Eigenschaften des gesinterten Formkörpers einstellen zu können. Bei nichtoxidkeramischen Werkstoffen sind dies vor allem Spurengehalte sowohl an metallischen Verunreinigungen wie z.B. Fe, Cr, Ni u.ä. als auch an nichtmetallischen Verunreinigungen wie z.B. N (bei Carbiden), C (bei Nitriden), O, F, Cl usw.

Grundsätzlich ist man bemüht, durch Auswahl geeigneter Syntheseverfahren die Keramikpulver in möglichst hochreiner Form aus hochreinen Ausgangsmaterialien herzustellen und durch Auswahl geeigneter Werkstoffe den Eintrag unerwünschter Verunreinigungen, die z.B. durch korrosive Nebenprodukte der Synthesereaktion über Transportreaktionen verursacht werden können, auszuschließen oder jedenfalls so gering wie möglich zu halten.

Es kann aber aus ökonomischen Gründen auch sinnvoll sein, von weniger reinen Ausgangsstoffen auszugehen, die ein stärker verunreinigtes Produkt ergeben, das anschließend einer Nachreinigung, z.B. einer Säurewäsche zur Entfernung metallischer Verunreinigungen, unterzogen wird.

Weiterhin können Verunreinigungen durch eine eventuell erforderliche Aufbereitung des einmal synthetisierten Keramikpulvers eingetragen werden. So muß das Pulver nach der Synthese häufig noch gemahlen werden, um z.B. eine bestimmte Feinheit, eine bestimmte Partikelgrößenverteilung, eine definierte spezifische Oberfläche, eine bestimmte Partikelmorphologie zu erzielen, um Agglomerate zu zerstören oder einen möglichst geringen Überkornanteil zu erreichen. Während der Mahlung kann es infolge mechanischen Abriebs oder auch tribochemischer Reaktionen zum Eintrag unerwünschter metallischer und nichtmetallischer Verunreinigungen in das Pulver kommen.

Üblicherweise versucht man zumindest den Eintrag metallischer Verunreinigungen in das Keramikpulver durch Auskleidung der Mühlen mit arteigenen Materialien auszuschließen, aber auch hier kann es ökonomisch sinnvoller sein, auf die teure Sinterkeramikauskleidung zu verzichten und einen eventuellen Metallabrieb durch eine anschließende Säurewäsche zu entfernen.

Aufgrund tribochemischer Reaktionen zwischen Mahlgut und Umgebungsmedium (Luft, Luftfeuchtigkeit, Wasserdampf, Wasser, organische Lösungsmittel mit Restfeuchtigkeitsgehalt) wird regelmäßig ein mehr oder weniger stark ausgeprägter, unerwünschter und häufig schwer zu reproduzierender Sauerstoffeintrag in das keramische Pulver beobachtet. So wird z.B. auf diese Weise bei der Aufmahlung von Si, Si₃N₄, SiC, B₄C oder TiC durch hydrolytische Reaktion der während der Mahlung frisch erzeugten, sehr reaktiven Oberflächen mit Wasser, Wasserdampf, aber auch mit Feuchtigkeitsspuren in organischen Lösungsmitteln oder bei Lagerung des frisch aufgemahlenen Pulvers in Raumluft, d.h. feuchtigkeitshaltiger Atmosphäre, eine Erhöhung des Sauerstoffgehaltes infolge Bildung von SiO₂, B₂O₃ resp. Kieselsäure und Borsäure beziehungsweise TiO₂-Hydrat beobachtet.

Zur Entfernung des auf diese Weise eingeschleppten Sauerstoffs kann insbesondere bei keramischen Pulvern auf Siliciumbasis eine nachfolgende Wäsche mit Flußsäure durchgeführt werden. Diese Wäsche überführt SiO₂ in lösliche Fluorokieselsäure, die anschließend bei der Abtrennung des Keramikpulvers durch Filtration ausgewaschen werden kann. So lassen sich zwar Pulver mit deutlich reduziertem Sauerstoffgehalt, aber mit einem relativ hohen Fluorgehalt, der insbesondere bei Si₃N₄-Pulvern oft deutlich über 300 ppm liegen kann, erhalten. Es hat sich nun gezeigt, daß dieser Fluorgehalt sehr fest auf der Oberfläche der Pulverpartikel adsorbiert ist und durch einfaches Waschen mit Wasser, Ammoniak oder durch Glühen in Inertatmosphäre bis 1300°C nicht ausreichend zu entfernen ist.

Bei der keramisch-technischen Verarbeitung dieser Pulver hat sich nun gezeigt, daß der Fluorgehalt die Verarbeitbarkeit der Pulver z.B. im Schlickergußverfahren erheblich erschweren kann. Schlecht reproduzierbare und häufig unkontrollierbare Änderungen des pH-Wertes, der Ionenstärke und der Viskosität des Gießschlickers können die Gießfähigkeit des Schlickers so erheblich beeinträchtigen, daß eine serienmäßig gleichförmige Herstellung qualitativ hochwertiger Keramik-Grünlinge nicht möglich ist.

Weiterhin muß auch damit gerechnet werden, daß ein erhöhter F-Gehalt über in Transportreaktionen gebildete leichtflüchtige Si-Verbindungen den Sinterverlauf stören kann und letztlich über die Ausbildung unerwünschter Gefügemorphologien die Eigenschaften der Sinterkeramik vor allem hinsichtlich Hochtemperaturfestigkeit, Korrosionsbeständigkeit und Kriechfestigkeit negativ beeinflussen kann (L.A.G. Hermansson, M. Burström, T. Johansson, M.E. Hatcher, J. Am. Ceram. Soc. 71(4), C183 - C184 (1988)).

Aufgabe dieser Erfindung ist es daher, Möglichkeiten zur Reduktion des Fluorgehaltes in derart hergestellten Pulvern zu offenbaren, um eine letztlich deutlich verbesserte gleichförmige Verarbeitbarkeit dieser Pulver und verbesserte mechanische Eigenschaften daraus hergstellter keramischer Formteile zu erzielen.

Überraschenderweise wurde nun gefunden, daß der Fluorgehalt durch eine Temperbehandlung des Pulvers bei Temperaturen oberhalb von 300°C, vorzugsweise zwischen 500 und 1500°C in einer Atmosphäre aus H₂- und/oder NH₃ beziehungsweise in H₂- und/oder NH₃-haltiger Stickstoff oder Edelgasatmosphäre erheblich reduziert werden kann.

Gegenstand dieser Erfindung ist somit ein Verfahren zur Herstellung fluorarmer nichtoxidischer, siliciumhaltiger keramischer Pulver, welches dadurch gekennzeichnet ist, daß das fluorhaltige keramische Ausgangspulver bei Temperaturen oberhalb zwischen 100°C und 1500°C einer Atmosphäre ausgesetzt wird, die ganz oder teilweise aus H₂, NH₃, Wasserdampf oder Gemischen dieser Gase mit Stickstoff oder Edelgasen besteht.

Besonders effektive F-Abreicherungen wurden im Temperaturbereich zwischen 1000 und 1500°C beobachtet, wenn eine Temperbehandlung in einer Stickstoff- oder Edelgasatmosphäre durchgeführt wurde, die bevorzugt 0,5 - 100 Vol.-% H₂ und/oder NH₃ enthält. Eine einfache Glühbehandlung des Pulvers in einer Inertatmosphäre unter analogen Bedingungen vermag den Fluorgehalt nur unwesentlich zu reduzieren.

Es wurde auch festgestellt, daß zusammen mit der Fluorabreicherung auch eine Abnahme des Oberflächensauerstoffgehaltes verbunden sein kann. Die ist jedoch nicht immer erwünscht, da z.B. bei Si₃N₄-Pulvern ein gewisser Sauerstoffgehalt erforderlich ist, um die Ausbildung einer silikatischen Schmelzphase zu erleichtern, über die während des Sinterprozesses die Gefügeverdichtung abläuft (Flüssigphasensintern).

Völlig überraschend zeigte sich nun, daß das oben beschriebene Temperverfahren leicht so modifiziert werden kann, daß eine deutliche Reduktion des Fluorgehaltes bei gleichzeitiger definierter Einstellung des Oberflächensauerstoffgehaltes erfolgt. Dazu wird die Temperung in einer Gasatmosphäre aus Luft, Wasserstoff, Stickstoff, Ammoniak oder Gemischen dieser Gase und der zusätzlichen Komponente Wasserdampf durchgeführt, wobei die Wasserdampfkonzentration bevorzugt mehr als 0,05 Vol.-% betragen sollte und die Temperung bei Temperaturen oberhalb von 250°C, vorzugsweise zwischen 300 und 800°C durchgeführt wird Bei geeignet eingestellter Temperzeit und einem geeignet eingestellten Verhältnis zwischen den reduzierenden Gaskomponenten Wasserstoff beziehungsweise Ammoniak und der oxidierenden Gaskomponente Wasserdampf, die z.B. abhängig ist von Schüttdichte und Schütthöhe des Pulvers, gelingt eine deutliche Fluorabreicherung und eine definierte Einstellung des Sauerstoffgehaltes an der Pulveroberfläche, ohne daß gleichzeitig der Gesamtsauerstoffgehalt den für hochwertige ingenieurkeramische Pulver als Grenzwert zu betrachtenden Gehalt von 2,5 Gew.-% übersteigt.

Bevorzugt wird beim erfindungsgemäßen Verfahren das fluorhaltige Pulver der erfindungsgemäßen Atmosphäre 0,5 bis 10 Stunden ausgesetzt.

Es ist allgemein bekannt, daß die Oxidation von Siliciumnitrid in trockener Atmosphäre sehr viel langsamer verläuft als in feuchter, wasserdampfhaltiger Atmosphäre. Es ist daher umso überraschender, daS die Fluorabreicherung mit Wasserdampf bei hohen Temperaturen ohne starke Sauerstoffaufnahme (weniger als 1 Gew.-% Sauerstoffzunahme) erfolgt.

Kontrollversuche mit trockenem N₂ oder unter Edelgasatmosphären zeigen keine ausreichende F-Abnahme. Ebenso zeigt sich keine Fluorabreicherung bei Anwendung trockener Luft unter gleichen Bedingungen. Für den genannten Effekt ist daher die Gegenwart des Wasserdampfs ausschlaggebend.

Das erfindungsgemäße Verfahren ist vorteilhaft durchführbar für alle Silicium-haligen keramischen Pulver. Besonders gute Ergebnisse werden mit Si₃N₄, SiC oder Silicium erzielt.

Gegenstand dieser Erfindung sind auch SiC-Pulver mit einem Gehalt an Sauerstoff von weniger als 1 Gew.-% und einer BET-Oberfläche von weniger als 20 m²/g, wobei diese einen Fluorgehalt von weniger als 30 ppm, bevorzugt weniger als 10 ppm, aufweisen und Si-Pulver mit einem Gehalt an Sauerstoff von weniger als 1 Gew.-% und einer BET-Oberfläche von weniger als 15 m²/g, welche einen Fluorgehalt von weniger als 30 ppm, bevorzugt weniger als 10 ppm, aufweisen.

Entsprechende Pulver sind bislang nicht bekannt geworden, obwohl sie seit langem für bestimmte Anwendungszwecke gefordert wurden, wie z.B. beim Silicium im Bereich der Photovoltaik oder bei der Halbleiterherstellung.

Die nach dem erfindungsgemäßen Verfahren erhältlichen Pulver sind weiterhin durch ihren extrem niedrigen Fluor-Gehalt an der Pulveroberfläche gekennzeichnet. Dies kommt vielen Anwendungsmöglichkeiten zugute. Da z.B. für den Schlickerguß hauptsächlich die chemischen und physikalischen Eigenschaften der Pulveroberfläche von Bedeutung sind, sind F-Gehalte von weniger als 0,5 At.-% gefordert. Dies wird von den erfindungsgemäßen Pulvern erfüllt, Im Bereich der Photovoltaik und der Halbleitertechnik sind noch höhere Reinheiten gefordert, also Oberflächenfluorgehalt von ≦ 0,3 At.-%. Auch dies wird durch die erfindungsgemäßen Pulver erfüllt.

Der Gesamtsauerstoffgehalt der erfindungsgemäßen keramischen Pulver kann nach der Methode der Heißextraktion im inerten Trägergasstrom ermittelt werden. Dabei wird die zu untersuchende Probe in einen Graphittiegel eingewogen und in einem Heliumstrom auf über 2300°C erhitzt. Der in der Probe enthaltene Sauerstoff wird dabei zu CO umgesetzt, das mit Hilfe einer IR-Meßzelle quantitativ bestimmt wird.

Zur Bestimmung des Gesamtfluorgehaltes werden die Pulverproben in einer alkalischen Schmelze aufgeschlossen. Der Fluorid-Gehalt wird quantitativ mit einer Fluoridionen-sensitiven Elektrode gemessen.

Der Fluorgehalt an der Pulveroberfläche läßt sich über ESCA aus der Peakintensität des F1s-Peaks, dividiert durch den atomaren Empfindlichkeitsfaktor für Fluor quantitativ ermitteln (Practical Surface Analysis by Auger and X-ray Photo-Electron-Spectroscopy; Ed. D. Briggs, M.P. Seak, Wiley and Sons, New York 1983). Die Nachweisgrenze liegt bei den verwendeten apparativen Bedingungen bei etwa 0,1 At-% F.

In den nachfolgenden Beispielen wird die Erfindung beispielhaft erläutert, ohne daß dadurch eine Einschränkung der Erfindung zu sehen ist.

### Beispiel 1

10 g eines HF-behandelten Si₃N₄-Pulvers mit einem Gesamtsauerstoffgehalt von 0,24 Gew.-%, einem Gesamtfluorgehalt von 900 ppm und einem Fluorgehalt an der Pulveroberfläche von 1,8 At-% wurden in einem Röhrenofen bei 600°C eine Stunde lang einer strömenden Dampf-Stickstoffatmosphäre (100 l/h) ausgesetzt. Nach der Temperbehandlung war der Gesamtsauerstoffgehalt um 0,44 Gew.-% auf 0,68 Gew.-% gestiegen. Die Fluorverunreinigungen sind auf einen Gesamtgehalt von etwa 30 ppm abgereichert worden. An der Pulveroberfläche war mit ESCA kein Fluor mehr nachweisbar, d.h. der Fluoroberflächengehalt liegt unter 0,1 At-%. Insgesamt konnte durch die thermische Behandlung der Fluorgehalt deutlich unter 100 ppm reduziert werden, ohne daß der Sauerstoffgehalt über ein vertretbares Maß ansteigt.

Die BET-Oberflächen, gemessen nach der N₂-1-Punkt-Methode (DIN 66 131), wurde mit 8 m²/g bestimmt.

### Vergleichsbeispiel 1

10 g des oben beschriebenen Si₃N₄-Ausgangspulvers wurden vier Stunden bei 1300°C in Stickstoffatmosphäre getempert. Nach dieser Glühbehandlung betrug der Gesamtsauerstoffgehalt 0,36 Gew.-% und der Gesamtfluorgehalt etwa 720 ppm.

Die Analysenwerte des Si₃N₄-Ausgangspulvers und der Proben aus Beispiel 1 und Vergleichsbeispiel 1 sind in Tab. 1 zusammengefaßt.

**Tab.1**

| Analysenwerte der Si₃N₄-Pulver aus Beispiel 1 und Vergleichsbeispiel 1 | | | | |
|---|---|---|---|---|
| Pulver | therm. Behandlung | O (Gew.-%) | F (ppm) | F_{Oberfl.} (AT-%) |
| Ausgangspulver | keine | 0,24 | 900 | 1,84 |
| Beispiel 1 | 1 h/600°C/Dampf-N₂ | 0,68 | 30 | <0,1 |
| Vergleichsbeisp.1 | 4 h/1300°C/N₂ | 0,36 | 720 | - |

### Beispiel 2

10 g eines HF-behandelten Siliciumpulvers mit einem Gesamtsauerstoffgehalt von 0,28 Gew.-%, einem Gesamtfluorgehalt von 35 ppm und einem Oberflächenfluorgehalt von 0,3 At-% wurden in einem Röhrenofen vier Stunden bei 1300°C mit einem Gasgemisch aus 6,5 % H₂ und 93,5 % Ar (100 l/h) begast. Nach der thermischen Behandlung betrug der Sauerstoffgehalt weniger als 0,1 Gew.-%, der Fluorgehalt weniger als 10 ppm und auf der Pulveroberfläche war mit ESCA kein Fluor mehr nachweisbar, d.h. der Oberflächenfluorgehalt liegt unter 0,1 At-%. Insgesamt konnten durch die thermische Nachbehandlung die Fluorverunreinigungen vollständig aus dem Pulver entfernt und dabei gleichzeitig der Sauerstoffgehalt noch weiter erniedrigt werden. Die BET-Oberfläche betrug 8 m²/g.

### Beispiel 3

10 g eines HF-behandelten SiC-Pulvers mit einem Gesamtsauerstoffgehalt von 0,18 Gew.-%, einem Gesamtfluorgehalt von 30 ppm und einem Oberflächenfluorgehalt von 0,37 At-% wurden in einem Röhrenofen vier Stunden bei 1300°C mit einem Gasgemisch aus 7,5 % H₂ und 92,5 % N₂ (100 l/h) begast. Nach der thermischen Behandlung betrug der Sauerstoffgehalt 0,20 Gew.-%, der Fluorgehalt weniger als 10 ppm und auf der Pulveroberfläche war mit ESCA kein Fluor mehr nachweisbar, d.h. der Oberflächenfluorgehalt liegt unter 0,1 At-%. Insgesamt konnten durch die thermische Nachbehandlung die Fluoridverunreinigungen bei etwa gleichbleibendem Sauerstoffgehalt vollständig aus dem Pulver entfernt werden. Die BET-Oberfläche des Pulvers wurde mit 8 m²/g bestimmt.

## Patentansprüche

1. Verfahren zur Herstellung fluorarmer nichtoxidischer, siliciumhaltiger keramischer Pulver, dadurch gekennzeichnet, daß das fluorhaltige keramische Ausgangspulver bei Temperaturen oberhalb zwischen 100°C und 1500°C einer Atmosphäre ausgesetzt wird, die ganz oder teilweise aus H₂, NH₃, Wasserdampf oder Gemischen dieser Gase mit Stickstoff oder Edelgasen besteht.

2. Verfahren gemäß Anspruch 1, dadurch gekennzeichnet, daß die Atmosphäre aus H₂, NH₃ oder Gemischen dieser Gase mit Stickstoff oder Edelgasen besteht und die Temperatur im Bereich von 1000 bis 1400°C liegt.

3. Verfahren gemäß Anspruch 2, dadurch gekennzeichnet, daß der Gehalt an H₂ und/oder NH₃ in der Atmosphäre mindestens 0,5 Vol.-% beträgt.

4. Verfahren gemäß Anspruch 1, dadurch gekennzeichnet, daß die Atmosphäre Wasserdampf und gegebenenfalls Luft enthält und die Temperatur 300 bis 800°C beträgt.

5. Verfahren nach Anspruch 4, dadurch gekennzeichnet, daß der Gehalt an Wasserdampf in der Atmosphäre mindestens 0,05 Vol.-% beträgt.

6. Verfahren gemäß einem oder mehreren der Ansprüche 1 bis 5, dadurch gekennzeichnet, daß das fluorhaltige Pulver der Atmosphäre 0,5 bis 10 Stunden ausgesetzt wird.

7. Verfahren gemäß einem oder mehreren der Ansprüche 1 bis 6, dadurch gekennzeichnet, daß das Siliciumhaltige keramische Pulver Si₃N₄, SiC oder Si ist.

8. SiC-Pulver mit einem Gehalt an Sauerstoff von weniger als 1 Gew.-% und einer BET-Oberfläche von weniger als 20 m²/g, dadurch gekennzeichnet, daß es einen Fluorgehalt von weniger als 30 ppm, bevorzugt weniger als 10 ppm, aufweist.

9. Si-Pulver mit einem Gehalt an Sauerstoff von weniger als 1 Gew.-% und einer BET-Oberfläche von weniger als 15 m²/g, dadurch gekennzeichnet, daß es einen Fluorgehalt von weniger als 30 ppm, bevorzugt weniger als 10 ppm, aufweist.
